# EUROPÄISCHE PATENTSCHRIFT

(11) **EP 0 769 190 B1**
(45) Veröffentlichungstag und Bekanntmachung des Hinweises auf die Patenterteilung: **02.09.1998**
(21) Anmeldenummer: 95921714.2
(22) Anmeldetag: 20.06.1995
(51) Int. Cl.: G21C 9/06, A62C 3/00, G21C 9/04

(54) **VERFAHREN UND VORRICHTUNG ZUR ERZEUGUNG EINES INERTISIERUNGSGASES**
INERT GAS GENERATION PROCESS AND DEVICE
PROCEDE ET DISPOSITIF DE GENERATION DE GAZ INERTE

(30) Priorität: 04.07.1994 DE 4423400
(43) Veröffentlichungstag der Anmeldung: 23.04.1997
(73) Patentinhaber: SIEMENS AKTIENGESELLSCHAFT, 80333 München (DE)
(72) Erfinder: ECKARDT, Bernd, D-63486 Bruchköbel (DE)
(86) Internationale Anmeldenummer: DE9500799
(87) Internationale Veröffentlichungsnummer: WO9601477

(56) Entgegenhaltungen:
- EP-A- 0 640 990
- WO-A-93/09848
- DE-A- 2 627 055
- DE-B- 2 218 578
- FR-A- 2 443 255
- GB-A- 2 090 736
- GB-A- 2 202 440

## Beschreibung

Die Erfindung betrifft ein Verfahren und eine Vorrichtung zur Erzeugung eines Inertisierungsgases zur Einspeisung in einen Behälter, insbesondere in einen Sicherheitsbehälter eines Kernkraftwerks.

Für Behälter industrieller Anlagen deren Atmosphäre brennbare, entzündbare sowie explosionsfähige Substanzen enthalten kann, ist häufig eine Bespeisung mit einem Inertisierungsgas zur Inertisierung der Atmosphäre vorgesehen. Insbesondere in einem Kernkraftwerk könnte im Falle einer Stör- oder Unfallsituation die Atmosphäre eines den Reaktorkern umschließenden Sicherheitsbehälters Wasserstoffgas infolge einer Kernaufheizung mit einer Oxidation von Zirkonium entstehen. Zur Inertisierung der Atmosphäre des Sicherheitsbehälters, insbesondere zur Vermeidung eines explosiven Gasgemisches, welches beispielsweise Wasserstoff als einen der reaktiven Bestandteile aufweist, ist eine Einspeisung von Inertisierungsgas in den Sicherheitsbehälter vorgesehen.

Zur Verhinderung der Bildung derartiger explosiver Gasgemische im Sicherheitsbehälter eines Kernkraftwerks sind verschiedene Verfahren und Einrichtungen vorgeschlagen worden. Hierzu gehören beispielsweise Einrichtungen, wie katalytische Rekombinatoren, katalytisch und elektrisch betriebene Zündeinrichtungen, eine Kombination der beiden vorgenannten Einrichtungen, permanente oder nachträglich Inertisierung der Atmosphäre und auch eine nachträgliche Inertisierung der Atmosphäre mit einer gleichzeitigen Druckentlastung des Sicherheitsbehälters.

Zur Inertisierung sind auch Verfahren bekannt, bei denen eine Flüssiggaseinspeisung über verzweigte Düsensysteme oder konventionelle Gaseinspeisesysteme mit integrierter Ölbrenner- oder Gasbrenner-Verdampferanlage erfolgen kann. Andere Varianten basieren auf einer Flüssiggaseinspeisung, wobei wegen fehlender Verdampfungsenergie in der Atmosphäre eines Kernkraftwerks auch eine Einspeisung in einen Wassersumpf innerhalb des Sicherheitsbehälters vorgesehen ist. Dies bedingt jedoch, daß je nach Verlauf eines Störfalles möglicherweise überhaupt kein Wassersumpf vorhanden ist, und daß durch eine Freisetzung von Inertgas im tiefgelegenen Bereich des Sicherheitsbehälters eine starke Temperaturschichtung und eine sich daraus ergebende ungünstige schichtweise Verteilung des Inertisierungsgases auftritt.

In der DE 39 27 958 A1 ist eine aktiv betriebene Vorrichtung beschrieben, bei der aus der Atmosphäre eines Sicherheitsbehälters Sauerstoff abgezogen und einer Verbrennungskraftmaschine zugeführt wird. Das entstehende Verbrennungsgas wird der Atmosphäre wieder zugeführt, wodurch sowohl eine Erniedrigung der Sauerstoffkonzentration als auch eine Inertisierung der Atmosphäre erreicht werden soll. Bei dieser Vorrichtung muß allerdings während eines Störfalles gewährleistet sein, daß die Verbrennungskraftmaschine funktionsfähig, ein Verbrennungskraftstoff in ausreichender Menge vorhanden und gegen eine ungewollte, unkontrollierte Verbrennung geschützt ist, wodurch die Vorrichtung aufwendig zu realisieren und zu kontrollieren ist.

Der Erfindung liegt daher die Aufgabe zugrunde, ein Verfahren sowie eine Vorrichtung anzugeben, so daß auf passive Art und Weise ein Inertisierungsgas in großer Menge herstellbar ist, welches insbesondere zur Einspeisung und Inertisierung eines Sicherheitsbehälters eines Kernkraftwerkes geeignet ist.

Die genannte Aufgabe wird für ein Verfahren zur Erzeugung eines Inertisierungsgases zur Einspeisung in einen Behälter, insbesondere in einen Sicherheitsbehälter eines Kernkraftwerkes, erfindungsgemäß gelöst, indem ein Inertgas in verflüssigter oder verfestigter Form in einem ersten Speicher vorgehalten wird, in einem zweiten Speicher eine zur Verdampfung von verflüssigtem bzw. verfestigtem Inertgas ausreichende Wärmemenge in einem Wärmeträger bereitgestellt wird und der Wärmeträger und das verflüssigte bzw. verfestigte Inertgas in thermischen Kontakt miteinander gebracht werden, wobei in dem zweiten Speicher eine Temperatur von über 100° C, bei einem flüssigen Wärmeträger vorzugsweise zwischen 150° C und 250° C, und bei einem feststoffartigen Wärmeträger vorzugsweise zwischen 300° C und 800° C, herrscht.

Mit dem Verfahren ist auf passive Art eine Erzeugung einer großen Menge eines Inertisierungsgases gewährleistet. Dadurch ist ein von äußerer Energiezufuhr unabhängiges Schnellinertisierungsverfahren der Atmosphäre eines Sicherheitsbehälters durch Verdampfung von verflüssigtem oder verfestigtem Inertisierungsgases erreicht. Das Inertisierungsgas kann dabei unter Druck stehend in die Atmosphäre des Sicherheitsbehälters injiziert werden. Von einer permanenten Inertisierung der Atmosphäre, welche eine Behinderung von Inspektions- und Wartungsarbeiten hervorriefe, kann somit abgesehen werden. Die Inertisierung kann kurzfristig aktiviert werden und ist auch bei einer geringen verfügbaren Wärmeenergie im Sicherheitsbehälter zuverlässig anwendbar. Ein mittels des Verfahrens erzeugtes Inertisierungsgas vermindert die Gefahr eines Kälteschocks für Komponenten, das Problem des Einfrierens sowie Zerstörens von Kleinleitungen und verhindert sicher Temperaturschichtungen mit ungleicher Verteilung des Inertisierungsgases innerhalb des Sicherheitsbehälters. Mit einer entsprechenden Gastemperierung ist ebenfalls die Nutzung bereits vorhandener Durchführungen und Leitungen in den Sicherheitsbehälter hinein zur Einspeisung des Inertisierungsgases ermöglicht.

Mit dem Verfahren zur Erzeugung eines Inertisierungsgases ist es ebenfalls möglich, in einem Störfall mit komplett ausgefallener Energieversorgung, ausreichend Inertisierungsgas zur Verfügung zu stellen, so daß die Atmosphäre des Sicherheitsbehälters innerhalb kurzer Zeit, vorzugsweise in weniger als zwei Stunden, mit beispielsweise 15 - 30 Vol.% Kohlendioxid gefüllt und dadurch eine Teilinertisierung oder eine Verdünnung mit der Vermeidung schneller Deflagrationen oder eine Vollinertisierung erreicht wird. Die Menge an verdampftem Inertgas kann bei über 10.000 kg/h liegen. Bei Verwendung von Kohlendioxid als Inertisierungsgas kann der Sauerstoffgehalt bei einer Teilinertisierung unter 17 Vol.% und bei einer Vollinertisierung unter 8 Vol.% bzw. bei Verwendung von Stickstoff unter 6 Vol.% gesenkt werden, so daß unabhängig von der Menge an Wasserstoffgas und des Entstehungsortes des Wasserstoffgases, das Risiko einer Explosion entscheidend gemindert bzw. ausgeschlossen wird. Durch Flüssig- oder Festlagerung eines Inertisierungsmittels in dem ersten Speicher in Kombination mit einem zweiten Speicher, beispielsweise einem Hochtemperaturspeicher für Wasser, ist somit ein kompaktes, ständig verfügbares und Ökonomisches Inertisierungsverfahren eines Sicherheitsbehälters ermöglicht. Durch die schnelle Erzeugung großer Mengen an Inertisierungsgas kann die Atmosphäre eines Sicherheitsbehälters gleichmäßig und störfallunabhängig so inertisiert werden, daß schnelle Verbrennungsreaktionen, wie hochturbulente Deflagrationen oder Detonationen, die zu einer Gefährdung des Sicherheitsbehälters führen können, grundsätzlich vermieden werden.

Die Wärmeübertragung von dem Wärmeträger auf das verflüssigte oder verfestigte Inertgas findet vorzugsweise durch direkten Kontakt der beiden Medien miteinander statt, wodurch eine direkte Verdampfung des Inertgases erreicht ist. Ein Wärmeübertrag kann auch über aktivierbare Wärmeüberträger, wie z.B. Rohr- oder Plattenwärmetauscher, Doppelmantel, etc. erfolgen. Der Wärmeüberträger kann innerhalb des ersten Speichers angeordnet oder mit diesem verbunden sein, wobei er von dem ersten Speicher im Normalfall, beispielsweise durch Entleerung oder Evakuierung, wärmetechnisch isoliert ist. Bei einem Störfall kann ein solcher aktivierbarer Wärmeüberträger mit dem Wärmeträger befüllt werden. Ein Wärmeüberträger kann auch als Vakuumisolierung mit einer Bruchstelle oder als Wärmefluideinspeisung ausgeführt sein. Das in thermischen Kontaktbringen des Inertgases mit dem Wärmeträger kann in Abhängigkeit der Zusammensetzung der Atmosphäre eines Sicherheitsbehälters, beispielsweise ab einer bestimmten Wasserstoff-Konzentration, oder aber infolge anderer physikalischer Kenngrößen des Sicherheitsbehälters, wie Kerntemperatur eines Kernreaktors oder Füllstandshöhe von Kühlwasser eines Kernreaktors, erfolgen.

Vorzugsweise wird als Inertgas Kohlendioxid und/oder Stickstoff verwendet. Diese Gase lassen sich in großen Mengen einfach, beispielsweise durch bekannte Kältemaschinen, verflüssigen bzw. verfestigen und sind insbesondere zur Inertisierung einer Wasserstoff und Sauerstoff enthaltenen Atmosphäre besonders geeignet.

Als Wärmeträger eignet sich insbesondere ein flüssiges Medium, wie Wasser oder ein Öl, insbesondere ein Thermoöl. Diese Medien lassen sich einfach auf eine hohe Temperatur, insbesondere oberhalb 100 °C, bringen und können auf dieser hohen Temperatur gehalten werden. Der zweite Speicher kann hierzu einen zwischengeschalteten Wärmeübertragungskreis und eine permanente Beheizung haben. Eine Permanentbeheizung erfolgt vorzugsweise elektrisch auf hohe Temperaturen von über 100 °C - 300 °C. Zur Erhöhung der Leistung oder Einstellung einer verfahrenstechnischen gewünschten Überhitzung des Inertgases, kann der zweite Speicher auch als Hochtemperatur-Feststoffspeicher mit Temperaturen von über 300 °C - 800 °C ausgeführt sein. Der Speicher kann so dimensioniert und isoliert sein, daß bei einem Energieausfall, insbesondere einem Ausfall der Permanentbeheizung, innerhalb einer Zeit von 24 h ein Wärmeverlust eintritt, der eine Abnahme der in dem Wärmeträger gespeicherten Wärmeenergie von weniger als 10 % bedingt. Für einen flüssigen Wärmeträger, insbesondere Wasser, kann der zweite Speicher besonders klein gehalten werden, wenn eine Energieausnutzung in einem Temperaturbereich von beispielsweise 150 °C bis in den Gefrierbereich des Wassers von 0 °C bis -10 °C gewährleistet ist.

Es ist ebenfalls möglich, ein verfestigtes Inertgas in feinverteilter Form in einen flüssigen Wärmeträger einzuführen. Das verfestigte Inertgas kann beispielsweise in Form eines Teilchenstrahls aus feinverteilten Eiskristallen oder Eisfragmenten in den flüssigen Wärmeträger eingeschossen werden.

Als Wärmeträger kann ebenfalls ein Feststoff verwendet werden. Hierzu eignen sich beispielsweise Metalle, wie Gußeisen oder Aluminium, sowie eine Keramik, wie Magnesit. Ein feststoffartiger Wärmeträger kann ständig auf einer hohen Temperatur gehalten werden und als Festbett, bestehend aus Kugeln, Peletts oder anderen Kleinteilen mit hoher Wärmeaustauschfläche, ausgeführt sein und innerhalb einer druckfesten Umschließung angeordnet werden. Es ist auch eine Ausführung eines feststoffartigen Wärmeträgers beispielsweise als ein einziger Block mit im Inneren des Blockes verlaufenden Kanälen zur Übertragung der Wärme möglich. Eine Beheizung des feststoffartigen Wärmeträgers erfolgt vorzugsweise elektrisch auf eine Temperatur von etwa 300 °C bis 800 °C. Hierdurch kann die Masse des feststoffartigen Wärmeträgers sowie die Größe des zweiten Speichers gering gehalten werden. Eine Vergleichmäßigung der Temperatur innerhalb des zweiten Speichers erfolgt beispielsweise über ein Umluftgebläse.

Vorzugsweise wird innerhalb des zweiten Speichers ein schüttfähiger feststoffartiger Wärmeträger verwendet. Der Wärmetrager kann insbesondere in Form eines Schüttgutes oder als Kugelhaufen vorliegen, wodurch auch eine Einspeisung des feststoffartigen Wärmeträgers in ein verflüssigtes Inertisierungsmittel des ersten Speicher durchgeführt werden kann. Durch einen direkten Kontakt eines flüssigen Inertgases mit dem feststoffartigen Wärmeträger wird ein hoher Wärmeübertragungskoeffizient bei kleinem Volumen des feststoffartigen Wärmeträgers ermöglicht. Bei dem direkten Kontakt des feststoffartigen Wärmeträgers mit dem verflüssigten oder verfestigten Inertgas ergibt sich insbesondere zu Beginn des Verfahrens eine hohe Austrittstemperatur für verdampftes Inertgas, welches dadurch entsprechend überhitzt ist. In ein solches überhitztes Inertgas kann wiederum flüssiges Inertgas eingeführt werden, wodurch eine wesentliche Steigerung der Verdampfungsrate erzielt wird. Eine Einspeisung von verflüssigtem Inertgas erfolgt feindispergiert mit erhöhter Geschwindigkeit, so daß eine Feinfragmentierung mit großen Wärmeaustauschflächen und schneller Verdampfung eintritt.

Es kann auch eine Wärmeübertragung über aktivierbare Wärmeüberträge, wie beispielsweise Rohr- oder Plattenwärmetauscher, erfolgen. Hierbei kann eine Ummantelung oder Isolierung eines als Feststoffblock ausgeführten feststoffartigen Speichers einfach als nichtdrucktragendes Teil ausgeführt werden. Ein solcher Wärmeüberträger kann direkt in den feststoffartigen Wärmeträger integriert werden und ist durch eine zuverlässige Abtrennung von dem verflüssigten Inertgas getrennt. Es ist ebenfalls möglich, das Verfahren mittels eines zwischengeschalteten Wärmeübertragungskreislaufes auszuführen, welcher im Normalfall evakuiert sein kann und zu Beginn des Verfahrens mit einem verflüssigten Inertgas befüllt wird.

Bevorzugt werden der erste Speicher und/oder der zweite Speicher mit einem Druck von 5 - 50 bar, vorzugsweise 20 bar, betrieben. Eine Druckerzeugung und -begrenzung innerhalb eines Speicher erfolgt, beispielsweise durch ein eigenmediumgesteuertes Regelventil, eine hydraulische Regelung des Druckes oder der Wärmeübertragung mit Heizflächen, sowie mittels einer Durchsatzregelung, insbesondere auf etwa 20 bar. Ein verflüssigtes Inertgas, beispielsweise Kohlendioxid, kann in einem Druckbereich von etwa 10 - 50 bar durch Kühlung mittels eines Kältemaschinenkreises gehalten oder bei Aufstellung des ersten Speichers innerhalb des Sicherheitsbehälters auch nahezu drucklos gelagert werden. Durch eine drucklose Lagerung kann zudem in dem Sicherheitsbehälter gespeicherte Wärmeenergie genutzt werden. Vorzugsweise wird der erste Speicher auf einer Temperatur von unter -10 °C gehalten. Bei einem thermischen Kontakt des Inertgases mit dem Wärmeträger, insbesondere mit Wasser, findet somit ein besonders großer Wärmeübertrag statt. Ein zusätzlicher Wärmeübertrag wird durch Ausnutzung der Gefrierenthalpie erreicht.

Durch die in dem zweiten Speicher herrschende Temperatur von über 100 °C, beispielsweise zwischen 150 °C und 250 °C bei einem flüssigen Wärmeträger und 300 °C bis 800 °C bei einem feststoffartigen Wärmeträger ist bei einem thermischen Kontakt des Wärmeträgers mit dem verflüssigten oder verfestigten Inertgas ein großer Wärmeübertrag und dadurch die Erzeugung einer großen Menge an Inertisierungsgas gewährleistet.

Das Inertgas wird vorzugsweise auf eine Temperatur von über -20 °C, insbesondere von über -10 °C aufgeheizt. Dadurch wird der Anteil an Wasserdampf in dem Inertisierungsgas kleingehalten und die Gefahr des Gefrierens sowie einer dadurch bedingten Verstopfung von Leitungen oder Düsen sicher vermieden.

Bevorzugt wird ein flüssiger Wärmeträger verwendet, der in ein verflüssigtes Inertgas eingeführt wird. Der flüssige Wärmeträger wird insbesondere in feinverteilter Form und/oder mit einer Geschwindigkeit von über 10 m/sec. in das verflüssigte Inertgas eingedüst. Das Eindüsen des Wärmeträgers, insbesondere aufgeheiztes Wasser, in das verflüssigte Inertgas führt zu einer spontanen Inertisierungsgasbildung sowie ggf. zu einem direkten Gefrieren des Wärmeträgers. Durch gleichzeitige Einspeisung geringer Mengen an Stickstoff kann ein direktes Gefrieren in einem Bereich der Einspeisedüsen zuverlässig verhindert werden. Durch einen Anteil eines nichtkondensierbaren Gases, wie beispielsweise Stickstoff, werden Kondensationsschläge vermieden, wie sie beispielsweise bei einer plötzlichen Kondensation von Wasserdampf entstehen können. Eine Mischung des verflüssigten Inertgases mit dem Wärmeträger, insbesondere Wasser, sowie eine gleichzeitige Verdampfung des Inertgases kann mittels eines Strahlpumpenapparates durchgeführt werden. Aufgrund der dadurch entstehenden Geschwindigkeitsunterschiede zwischen dem Wärmeträger und dem Inertgas erfolgt eine schnelle Dispergierung und Mischung. Der Strahlpumpenapparat wird bevorzugt in eine der beiden Flüssigkeiten eingetaucht. Durch Einspeisung des Wärmeträgers in das verflüssigte Inertgas wird gleichzeitig eine Komprimierung des Inertisierungsgases innerhalb des ersten Speichers erreicht. Durch entsprechende Regelung der verdampften Menge des Inertgases sowie eines entsprechenden Überdruckes kann das erzeugte Inertisierungsgas rein gasförmig oder mit einem geringen Flüssiganteil, von insbesondere < 0,5 %, aus dem ersten Speicher herausgeführt werden. Das in dem ersten Speicher unter Druck stehende, geschwindigkeitslose Inertisierungsgas wird durch entsprechende Leitungen, insbesondere Düsen, beschleunigt und mit einer hohen Geschwindigkeit in den Sicherheitsbehälter eingeführt. Dies gilt entsprechend auch für ein Verfahren, bei dem ein verflüssigtes Inertgas in einen Wärmeträger eingedüst wird.

Bei einem Verfahren, bei dem verflüssigtes Inertgas in den Wärmeträger eingedüst wird, hat das Inertgas, insbesondere eine Geschwindigkeit von über 10 m/sec. und liegt in feinverteilter Form vor. Durch Einspeisung des verflüssigten Inertgases bei einer Temperatur von beispielsweise -10 °C bis -50 °C ist eine effektive Ausnutzung der Wärmeenergie des Wärmeträgers gewährleistet, da beispielsweise eine Abkühlung bis in den Gefrierbereich von Wasser und damit eine teilweise Nutzbarmachung der Gefrierenthalpie erfolgt. Durch ein Eindüsen wird durch Dispergierung eine Eisfragmentierung beim Gefrieren erreicht, ohne Bildung großer zusammenhängender, die Integrität des zweiten Speichers gefährdender Eisstücke. Durch Verwendung eines Gegenstromwärmetauschers ist zudem eine größere Ausnutzung der Wärmeenergie des Wärmeträgers gegeben, da in einem Eintrittsbereich des verflüssigten Inertgases bereits ein Gefrieren, bei entsprechenden Zusatzmitteln auch unterhalb von beispielsweise -10 °C, erfolgt und in einem Austrittsbereich des Inertisierungsgases aus dem zweiten Speicher heraus eine Aufheizung des Inertisierungsgases auf einem höheren Temperaturniveau stattfindet.

Erzeugtem Inertisierungsgas wird vorzugsweise ein katalytisches Aerosol als Suspension oder Pulver beigemischt. Das katalytische Aerosol ist insbesondere geeignet, eine Oxidation von Wasserstoffgas bei Raumtemperatur einzuleiten. Das katalytische Aerosol kann innerhalb des Sicherheitsbehälters schwebend wie auch als Ablagerung eine effektive Oxidation des Wasserstoffes ermöglichen und ist somit sowohl in einem Kurzzeit- als auch einem Langzeitbereich wirksam.

Das Inertgas wird vorzugsweise im Anschluß an seine Verdampfung als Inertisierungsgas in einen Behälter eingeführt, der Wasserstoffgas aufweist, so daß eine Verringerung der Wasserstoffgas-Konzentration zur vollständigen Inertisierung des Behälters oder zur kontrollierten Wasserstoffgas-Umwandlung durchgeführt wird. Mit dem Inertisierungsgas erfolgt ebenfalls eine Reduzierung der Konzentration an Sauerstoff, so daß die Gefahr der Bildung eines explosiven Gasgemisches aus Wasserstoff und Sauerstoff wirksam verhindert wird. Bei einer teilweisen Inertisierung ist beispielsweise über Rekombinatoren eine gefahrlose katalytische Umwandlung des Wasserstoffes gegeben. Vor Einspeisung des Inertisierungsgases in den Behälter kann eine Druckentspannung mittels einer Drossel oder eines Ventils zur Trocknung des Inertisierungsgases sowie zur Druckregelung erfolgen.

Die auf eine Vorrichtung gerichtete Aufgabe wird erfindungsgemäß gelöst durch eine Vorrichtung zur Erzeugung eines Inertisierungsgases zur Einspeisung in einen Behälter, insbesondere in einen Sicherheitsbehälter eines Kernkraftwerkes, mit einem ersten Speicher zur Aufbewahrung von verflüssigtem oder verfestigtem Inertgas, mit einem zweiten Speicher zur Bereitstellung eines Wärmeträgers mit einer Temperatur von über 100° C, und mit einer Verbindung, die im Normalfall geschlossen ist und eine thermische Isolierung des verflüssigtem bzw. verfestigtem Inertgases von dem Wärmeträger gewährleistet und im Bedarfsfall geöffnet ist, so daß ein thermischen Kontakt des Inertgases mit dem Wärmeträger herstellbar ist. Die Vorrichtung ist besonders kompakt ausführbar, wobei das Volumen des zweiten Speichers bis auf ca. 50 % des Volumens des ersten Speichers verringerbar ist. Dies ist insbesondere bei einem zweiten Speicher der Fall, welcher mit Wasser als Wärmeträger befüllt wird und aus dem das Wasser in den ersten Speicher eingedüst wird, wodurch eine Direktverdampfung des verflüssigten oder verfestigten Inertgases erfolgt. Dabei kann ebenfalls bei Temperaturen unterhalb des Gefrierpunktes von Wasser eine Teilnutzung der Gefrierentalpie zur Verdampfung des Inertgases beitragen. Die Vorrichtung eignet sich somit besonders zur Erzeugung großer Mengen an Inertisierungsgas und damit zur Nachinertisierung, insbesondere sowohl zur Teilinertisierung als auch zur Vollinertisierung eines Sicherheitsbehälters eines Kernkraftwerkes. Sie ist mit geringem technischen sowie finanziellen Aufwand auch nachträglich installierbar.

Eine weitere Verringung des von einer Vorrichtung benötigten Platzbedarfes wird dadurch erreicht, daß der erste Speicher und der zweite Speicher vertikal übereinander angeordnet sind. Hierdurch entfallen zusätzliche Leitungen, die Verbindung zwischen dem ersten Speicher und dem zweiten Speicher kann besonders kurzgehalten sein und der erste Speicher und der zweite Speicher sind mit einer einzigen Isolierung umgeben, die ebenfalls die Speicher horizontal gegeneinander isoliert.

Bevorzugtermaßen erfolgt ein Fluidstrom des verflüssigten Inertgases in den zweiten Speicher hinein bzw. ein Fluidstrom eines flüssiges Wärmeträgers in den ersten Speicher hinein infolge eines höheren Druckes in dem ersten Speicher bzw. dem zweiten Speicher. Das Inertgas bzw. der Wärmeträger wird dadurch infolge einer Druckdifferenz zwischen dem ersten Speicher und dem zweiten Speicher in den jeweils anderen Speicher hineingeführt. Beispielsweise hat der erste Speicher einen Druck von 20 bar und der zweite Speicher einen Druck von 40 bar. Die Druckdifferenz zwischen den beiden Speichern beträgt dabei, insbesondere 2 bar bis 10 bar. Eine Mischung des Inertgases mit dem Wärmeträger erfolgt über Düsen mit einer Eindüsegeschwindigkeit von mehr als 10 m/sec., insbesondere etwa 30 m/sec. bis 50 m/sec. Eine Regelung des durch das verdampfende Inertgas entstehenden Druckes erfolgt beispielsweise über eine Drossel oder ein Regelventil in der Verbindung zwischen den beiden Speichern. Der maximale Fluidstrom durch die Verbindung hindurch wird durch eine Drossel begrenzt, wodurch eine explosionsartige Gasbildung sicher vermieden ist. Durch Aufbringen eines zusätzlichen Druckes, beispielsweise durch Einleitung von unter Druck stehendem Stickstoff kann die Druckdifferenz zwischen den beiden Speichern solange aufrecht erhalten werden, bis das verflüssigte oder verfestigte Inertgas überwiegend verdampft ist. Das durch Verdampfung des verflüssigten oder verfestigten Inertgases erzeugte Inertisierungsgas wird vorzugsweise mit einem Druck zwischen 5 bar bis 10 bar in einen Sicherheitsbehälter hineingeführt. Dadurch können beispielsweise bestehende Leitungen und Durchführungen eines Sicherheitsbehälters eines Kernkraftwerkes für die Einspeisung des Inertisierungsgases verwendet werden.

Der zweite Speicher weist vorzugsweise einen Überhitzer auf, in dem verdampftes Inertgas zusätzlich aufheizbar ist. Hierzu wird verdampftes Inertgas, d.h. das Inertisierungsgas, aus dem zweiten Speicher heraus- und über eine separate Leitung wieder in den Überhitzer hineingeführt, von wo das Inertisierungsgas in einen oberhalb des Pegels des Wärmeträgers vorhandenen Dampfbereich geleitet wird. Der mit verdampften Inertgas, dem Inertisierungsgas, gefüllte Dampfbereich wird dadurch weiter aufgeheizt und das Inertisierungsgas erfährt eine zusätzliche Druckerhöhung.

Vorzugsweise ist eine Einrichtung zur Einspeisung eines katalytischen Aerosols, beispielsweise in Form einer Suspension oder eines Pulvers, in verdampftes Inertgas vorgesehen. Diese Einrichtung ist bevorzugt außerhalb der Speicher, insbesondere mit einer zur Führung des Inertisierungsgases vorgesehenen Leitung verbunden. Eine Einspeisung des Aerosols in einen Gasstrom des Inertisierungsgases erfolgt über eine entsprechende Düse, insbesondere über ein Venturi-Rohr.

Der zweite Speicher ist in einer besonderen Ausgestaltung ein Heizbehälter einer Venting-Einrichtung eines Kernkraftwerkes. Der zweite Speicher stellt somit einen Hochtemperatur-Energiespeicher für ein Venting-Waschflüssigkeit mit einer Temperatur von beispielsweise über 90 °C dar. Dieser Hochtemperatur-Energiespeicher ist einfach mit einer Eindüsevorrichtung auch im Zuge einer Nachrüstung versehbar, so daß verflüssigtes oder verfestigtes Inertgas über diese Eindüsevorrichtung in den Hochtemperatur-Energiespeicher einführbar ist. Durch eine zusätzliche, insbesondere in einem oberen Bereich des Hochtemperatur-Energiespeichers anordenbare, Ableitung kann in einem Störfall verdampftes Inertgas über schon bestehende Leitungen bzw. Leitungssysteme in einen Sicherheitsbehälter eines Kernkraftwerkes eingeführt werden. Mit geringen baulichen Maßnahmen sowie der Bereitstellung eines ersten Speichers mit verflüssigtem oder verfestigtem Inertgas ist somit mit geringem Aufwand eine Vorrichtung zur Erzeugung einer großen Menge an Inertisierungsgas gegeben. Diese Vorrichtung eignet sich besonders als Ergänzung zu einer bereits bestehenden Venting-Einrichtung eines Kernkraftwerks, wodurch eine Inertisierung sowie ein Venting der Atmosphäre des Sicherheitsbehälters ermöglicht ist.

Eine Vorrichtung zur Erzeugung von Inertisierungsgas ist ebenfalls ohne großen technischen Aufwand innerhalb eines Sicherheitsbehälters eines Kernkraftwerkes anordenbar. Gegenüber bekannter Vorrichtungen zur Erzeugung eines Inertisierungsgases entsteht hierdurch keine Beeinträchtigung der Sicherheit des Sicherheitsbehälters, da zum Betrieb der Vorrichtung insbesondere keinerlei brennbare Substanzen benötigt werden. Auch bleibt der Sicherheitsbehälter an sich geschlossen.

Das Verfahren sowie die Vorrichtung werden anhand der Zeichnung näher erläutert. Es zeigen in schematischer Darstellung:
- FIG 1: Eine erste Ausführungsform der Vorrichtung, bei der eine Einspeisung des Wärmeträgers in verflüssigtes Inertgas vorgesehen ist,
- FIG 2: eine Einspeisedüse in einem Längsschnitt gemäß FIG 1,
- FIG 3: eine zweite Ausführungsform der Vorrichtung mit einem Hochtemperatur-Energiespeicher einer Venting-Einrichtung
- FIG 4: eine dritte Ausführungsform der Vorrichtung, bei der eine Einspeisung von verflüssigtem Inertgas in einen Wärmeträger vorgesehen ist,
- FIG 5: eine vierte Ausführungsform der Vorrichtung mit einem feststoffartigen Wärmeträger und
- FIG 6: eine fünfte Ausführungsform der Vorrichtung mit einem von Feststoffkanälen durchzogenen feststoffartigen Wärmeträger.

In den Figuren sind jeweils schematisch nur die zur Erläuterung notwendigen Komponenten der Vorrichtung dargestellt.

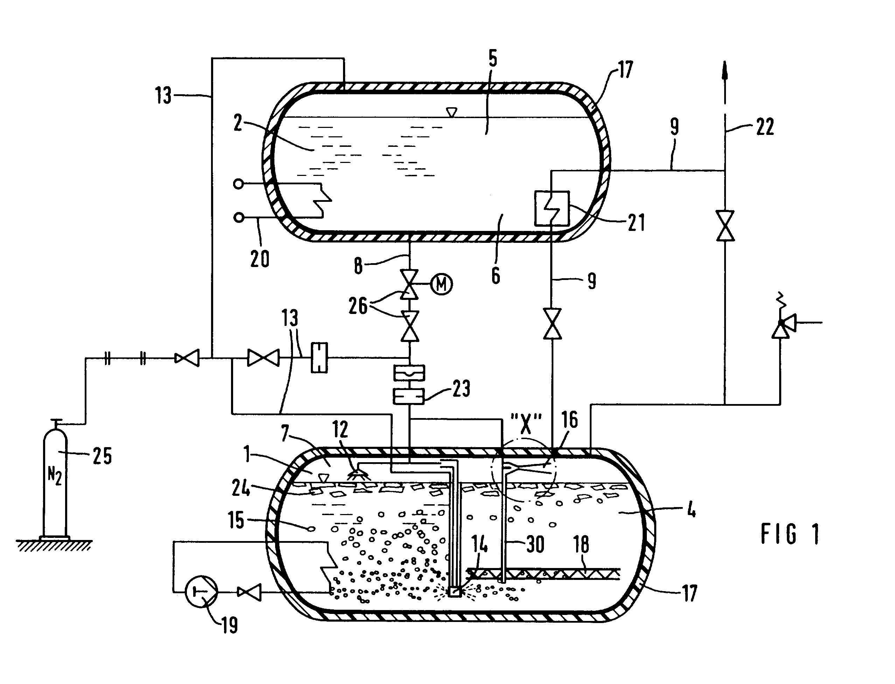

FIG 1 zeigt einen zweiten Speicher 5, der mit einem Wärmeträger 2, insbesondere Wasser, befüllt ist. Der zweite Speicher 5 hat eine Heizung 20 und ist von einer Isolierung 17 umgeben. In einem unteren Bereich 6 des zweiten Speichers 5 ist ein Überhitzer 21 angeordnet. Der Überhitzer 21 ist über eine Überhitzerleitung 9 mit einem ersten Speicher 4, welcher mit verflüssigtem Inertgas 1 teilweise gefüllt ist, verbunden. Zudem ist der Überhitzer 21 mit einer Gasleitung 22, die zu einem hier nicht dargestellten Behälter führt, verbunden. Die Gasleitung 22 ist wiederum mit dem ersten Speicher 4 verbunden. Der zweite Speicher 5 steht mit dem ersten Speicher 4 über eine Verbindungsleitung 8 in Verbindung, durch die das Wasser des zweiten Speichers 5 in den ersten Speicher 4 führbar ist. Die Verbindungsleitung 8 ist über ein Ventil 26, insbesondere ein motorbetriebenes oder fremdmediumbetriebenes Ventil, verschließbar. Weiterhin ist in der Verbindungsleitung eine Drossel 23, zur Drosselung eines Fluidstromes angeordnet. Der erste Speicher 4 ist ebenfalls von einer Isolierung 17 umgeben und hat eine Kältemaschine 19 mit Pumpe. Die Verbindungsleitung 8 mündet innerhalb des ersten Speichers 4 in verschiedene Einspeisevorrichtungen. Diese sind eine Sprühdüse 12, die in einem Gasraum 7 oberhalb des verflüssigten Inertgases angeordnet ist, eine Mischdüse 16, ein Mischelement 18, welches innerhalb des verflüssigten Inertgases 1 angeordnet ist, und eine Einspeisedüse 14, die ebenfalls innerhalb des verflüssigten Inertgases 1 liegt. Die Mischdüse 16 hat eine Zuleitung, welche ebenfalls bis in das verflüssigte Inertgas 1 hineinragt. Weiterhin ist ein Druckbehälter 25 für ein Schutzgas, beispielsweise Stickstoff, dargestellt, welcher über eine Stickstoffzuleitung 13 sowohl mit dem ersten Speicher 4 als auch mit dem zweiten Speicher 5 verbunden ist. Bei einem Öffnen des Ventil 26, beispielsweise infolge eines Störfalles in dem nicht dargestellten Behälter, strömt heißes Wasser, beispielsweise mit einer Temperatur von 150 °C in den ersten Speicher 4 hinein. Der Strömungsvorgang des heißen Wassers erfolgt druckgetrieben infolge eines höheren Druckes innerhalb des zweiten Speichers 5 gegenüber einem niedrigeren Druck innerhalb des ersten Speichers 4, wobei die Druckdifferenz beispielsweise in einem Bereich von 2 bar bis 10 bar liegt. Um das Wasser weitgehend vollständig in den ersten Speicher 4 einzuführen, ist zur Aufrechterhaltung der Druckdifferenz eine Einspeisung von Schutzgas aus dem Schutzgasdruckbehälter 25 über die Zuleitung 13 vorgesehen. Ein Zufluß des heißen Wassers in den ersten Speicher 4 hinein wird über die Drossel 23 gesteuert, so daß eine übermäßige verdampfung des verflüssigten Inertgases 1, insbesondere eine Dampfexplosion, vermieden wird. Das heiße Wasser wird direkt über die Einspeisedüse 14 sowie das Mischelement 18 in das verflüssigte Inertgas 1 eingeführt, wodurch durch unmittelbare Verdampfung des verflüssigten Inertgases 1 Gasblasen 15 entstehen, die in den Gasraum 7 aufsteigen. Gefrierendes Wasser steigt ebenfalls als Eisstück 24 in Richtung des Gasraums 7. In der Mischdüse 16 erfolgt unmittelbar eine Mischung des heißen Wassers mit dem verflüssigten Inertgas 1, und somit eine Direktverdampfung des verflüssigten Inertgases 1 sowie ein Druckaufbau innerhalb des Gasraumes 7. In dem Gasraum 7 erfolgt eine Komprimierung und Druckerhöhung des verdampften Inertgases 1, welches über die Gasleitung 22 mit hoher Geschwindigkeit, in einen hier nicht dargestellten Behälter, eingeführt werden kann. Durch Einspeisung des heißen Wassers in den ersten Speicher 4, der das verflüssigte Inertgas 1 bei einer Temperatur von unter -10 °C enthält, kann eine Verdampfung großer Mengen des Inertgases, z.B. etwa 10.000 kg/h, und damit eine Erzeugung großer Mengen von Inertisierungsgas gewährleistet werden.

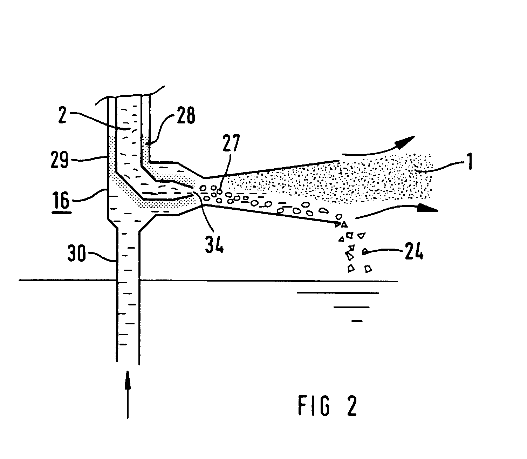

In FIG 2 ist in vergrößertem Maßstab die Mischdüse 16 gemäß FIG 1 (Detail "X") dargestellt. Die Mischdüse 16 hat eine Zuleitung 30 für verflüssigtes Inertgas 1. In die Zuleitung 30 mündet ein Doppelrohr 29 in dessen innerem Rohr der Wärmeträger, d.h. das heiße Wasser, geführt ist. In dem äußeren Rohr des Doppelrohrs 29 wird Schutzgas, insbesondere Stickstoff. geführt. An der Mündung 34 des Doppelrohrs 29 treffen das heiße Wasser, das Schutzgas 28 sowie das verflüssigte Inertgas 1 aufeinander. Hierdurch entsteht durch Direktverdampfung des verflüssigten Inertgases 1 das Inertisierungsgas sowie infolge eines Gefrierens des Wassers eine Vielzahl von Eisstücken 24. Durch das Schutzgas 28 wird die Mündung 34 vor einem Zufrieren geschützt. Eine konische Erweiterung der Mischdüse 16 stromab der Mündung 34 bewirkt eine Hochgeschwindigkeitsmischung und Verteilung des verflüssigten Inertgases 1 mit dem heißen Wasser. Hierdurch wird auf besonders effektive Weise eine Verdampfung des verflüssigten Inertgases erzielt.

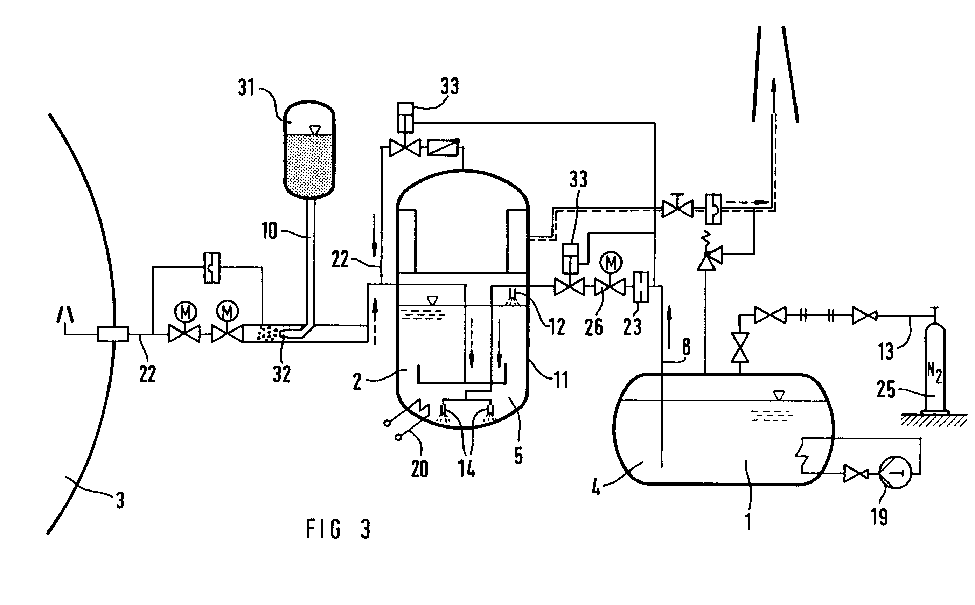

FIG 3 zeigt schematisch eine Vorrichtung zur Erzeugung eines Inertisierungsgases mit einem ersten Speicher 4, einem zweiten Speicher 5, einer Einrichtung 10 zur Aerosoleinspeisung und ein Sicherheitsbehälters 3 eines Kernkraftwerks. Der zweite Speicher 5 ist ein Hochtemperatur-Energiespeicher 11 einer Venting-Einrichtung zur Umwälzung der Atmosphäre des Sicherheitsbehälters 3. Der Hochtemperatur-Energiespeicher 11 hat eine Heizung 20 und ist teilweise mit einem Wärmeträger 2, insbesondere Wasser mit einer Temperatur von etwa 100 °C und einem Druck von < 10 bar gefüllt. In dem ersten Speicher 4 befindet sich verflüssigtes Inertgas 1. Er wird über eine Kältemaschine 19, beispielsweise auf eine Temperatur von unter -10 °C, gekühlt. Zur Aufrechterhaltung bzw. Erhöhung des Druckes innerhalb des ersten Speichers 4 ist dieser über eine Zuleitung 13 mit einem Druckbehälter 25 für ein Schutzgas, insbesondere Stickstoff, verbunden. Der erste Speicher 4 ist über eine Verbindungsleitung 8 mit dem Hochtemperatur-Energiespeicher 11 verbunden. Die Verbindungsleitung 8 enthält im Inneren des Hochtemperatur-Energiespeichers 11 Einspeisedüsen 14 sowie Sprühdüsen 12. Über eine Gasleitung 22 ist verdampftes Inertgas 1 aus dem Hochtemperatur-Energiespeicher 11 herausführbar und in den Sicherheitsbehälter 3 leitbar, wobei die Gasleitung 22 auf bestehende Leitungen des Hochtemperatur-Energiespeichers 11 in den Sicherheitsbehälter 3 hinein zurückgreifen kann. In der Gasleitung 22 sowie der verbindungsleitung 8 ist jeweils ein eigenmediumbetätigbares Ventil 33 angeordnet, wodurch eine Einspeisung des verflüssigten Inertgases 1 in den Hochtemperatur-Energiespeicher 11 sowie aus diesem heraus in den Sicherheitsbehälter 3 hinein regelbar ist. In die Gasleitung 22 ist eine Einrichtung 10 zur Aerosoleinspeisung eingefügt, die einen Speicher 31 für eine Aersolsuspension und eine Düse 32 zur Einspeisung des Aerosols in das verdampfte Inertgas aufweist. Eine Vorrichtung ermöglicht ohne große bautechnische Maßnahmen eine Einbindung eines vorhandenen Venting-Systems zur Erzeugung großer Mengen eines Inertisierungsgases, wodurch eine Einspeisung des Inertisierungsgases direkt über das Venting-System in den Sicherheitsbehälter 3 ermöglicht wird.

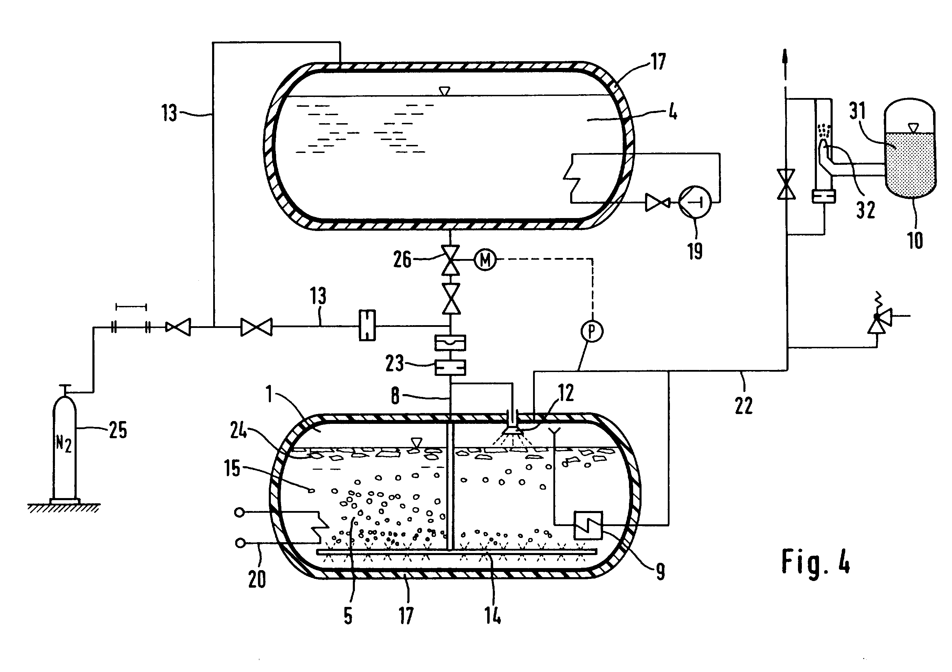

In FIG 4 ist eine Vorrichtung zur Erzeugung eines Inertisierungsgases dargestellt, bei der flüssiges Kohlendioxid bei einer Temperatur von unter -10 °C in einem ersten Speicher 4 vorgehalten und durch eine Verbindungsleitung 8 in einen zweiten Speicher 5, der heißes Wasser von über 100 °C enthält, eingespeist wird. Zur Aufrechterhaltung eines Druckunterschiedes zwischen dem ersten Speicher 4 und dem zweiten Speicher 5 ist analog zur FIG 1 ein Druckbehälter 25 für ein Schutzgas mit einer entsprechenden Zuleitung 13 dargestellt. Der zweite Speicher 5 weist eine Gasleitung 22 für die Abfuhr verdampften Inertgases 1 auf, in welche analog zur FIG 3 eine Einrichtung 10 zur Aerosoleinspeisung dargestellt ist. Das verflüssigte Inertgas 1 wird über eine Sprühdüse 12 sowie eine in dem heißen Wasser angeordnete Einspeisedüse 14 in den zweiten Speicher 5 eingespeist. Für eine weitere Erwärmung und Druckerhöhung des verdampften Inertgases 1 enthält der zweite Speicher 5 einen Überhitzer 9, der mit der Gasleitung 22 verbunden ist. Mit dieser Vorrichtung ist es ebenfalls möglich, verfestigtes Inertgas beispielsweise in Form eines Teilchenstrahls aus feinverteilten Eispartikeln in das heiße Wasser einzuschießen. Dadurch entsteht ebenfalls infolge eines Direktverdampfens das Inertisierungsgas. Weitere Merkmale sowie die Bezugszeichen stimmen mit denen der FIG 1 und der FIG 2 überein.

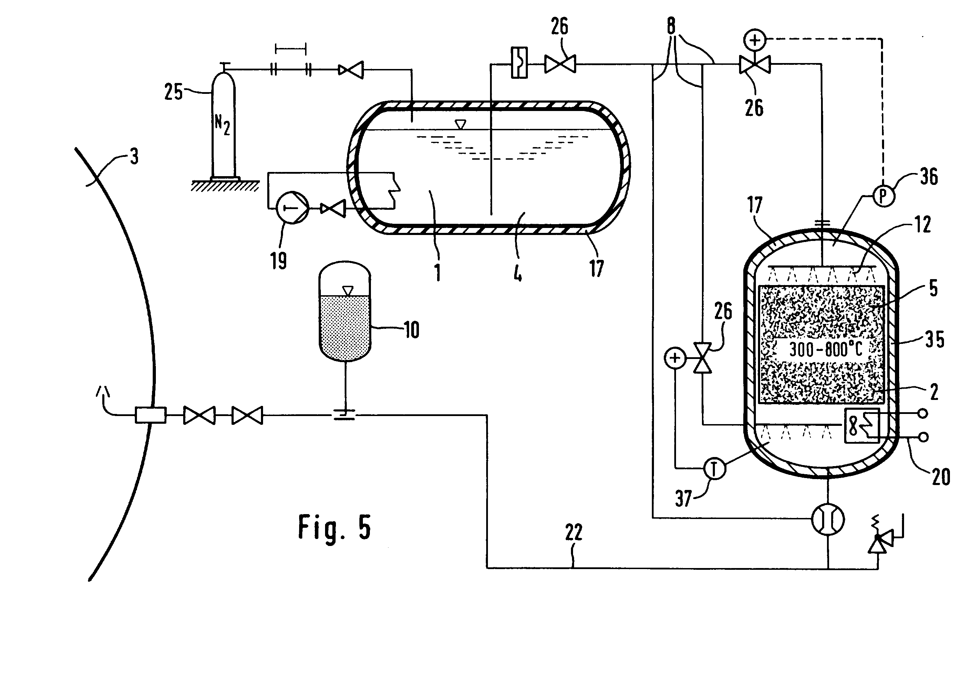

FIG 5 zeigt schematisch eine vierte Ausführungsform der Vorrichtung mit einem ersten Speicher 4, der ein verflüssigtes Inertgas 1, beispielsweise Kohlendioxid oder Stickstoff, enthält und einen zweiten Speicher 5, der einen feststoffartigen Wärmeträger 2 enthält. Nicht näher erläuterte Details der FIG 5, wie beispielsweise ein Sicherheitsbehälter 3, eine Einrichtung 10 zur Aerosoleinspeisung, eine Kältemaschine 19 sowie Flüssigkeitseinspeisevorrichtungen entsprechen denen der FIG 1 bis 4. Die Bezugszeichen hierfür stimmen entsprechend mit den FIG 1 bis FIG 4 überein. Der erste Speicher 4 ist mit dem zweiten Speicher 5 über eine Verbindungsleitung 8 verbunden. Die Verbindungsleitung 8 ist in drei Äste aufgeteilt, wobei ein Ast innerhalb des zweiten Speichers 5 in Sprühdüsen 12 endet, durch welche verflüssigtes Inertgas 1 direkt auf den feststoffartigen Wärmeträger 2 gesprüht wird. Dieser feststoffartige Wärmeträger 2 hat eine Temperatur von etwa 300 °C bis 800 °C. Aufgrund der hohen Temperaturdifferenz zwischen dem verflüssigten Inertgas 1 und dem feststoffartigen Wärmeträger 2 hat das durch Direktverdampfung entstehende Inertisierungsgas in einem unteren Bereich 6 des zweiten Speichers 5 ebenfalls eine hohe Temperatur. In dieses Inertisierungsgas wird über einen weiteren Ast der Verbindungsleitung 8 zusätzlich verflüssigtes Inertgas 1 über Sprühdüsen 12 eingespeist, wodurch eine weitere Verdampfung von Inertgas 1 stattfindet. Zudem wird durch dieses zusätzliche Einspeisen von verflüssigtem Inertgas 1 die Verdampfungsrate erhöht. Eine Regelung der Menge an zugeleitetem verflüssigten Inertgas 1 erfolgt über entsprechende Ventile 26 Ästen der Verbindungsleitung 8. Diese Ventile 26 werden über eine Druckmeßstelle 36 bzw. eine Temperaturmeßstelle 37 gesteuert. Der zweite Speicher 5 ist mit einem Sicherheitsbehälter 3 eines Kernkraftwerkes über eine Gasleitung 22 verbunden. Durch die Gasleitung 22 wird aus dem zweiten Speicher 5 austretendes Inertisierungsgas, welches eine Temperatur von etwa 50 °C aufweist, eingeführt. Über einen zusätzlichen Ast der Verbindungsleitung 8 kann eine Zusatzeinspeisung von verflüssigtem Inertgas 1 in die Gasleitung 22 erfolgen, wodurch eine weitere Steigerung der Verdampfungsrate erzielt wird. Der zweite Speicher 5 hat an seiner Innenseite eine Innenisolierung 35, welche der Reduktion der Wandtemperatur des zweiten Speichers dient, wodurch eine mechanische Beanspruchung des zweiten Speichers verringert und dieser mit einer kleinen Wandstärke ausgeführt werden kann.

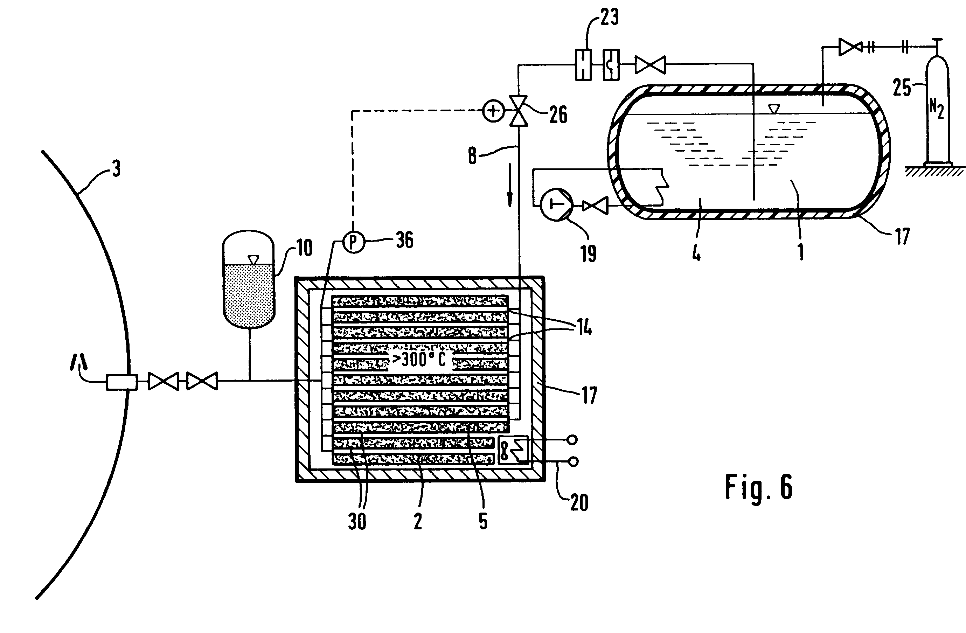

In FIG 6 ist analog zu FIG 5 eine fünfte Ausführungsform der Vorrichtung mit einem feststoffartigen Wärmeträger 2 dargestellt. Die Bezugszeichen sowie nicht näher erläuterte Details stimmen mit denen der FIG 1 bis FIG 5 überein. Der zweite Speicher 5 enthält wie in FIG 5 dargestcllt eine Heizung 20, die auch eine Vergleichmäßigung der Temperatur innerhalb des zweiten Speichers 5 gewährleistet. Der feststoffartige Wärmeträger 2 ist als monolithischer Block ausgeführt, welcher von Feststoffkanälen 30 durchzogen ist. In diese Feststoffkanäle 30 wird das verflüssigte Inertgas gasdicht über Einspeisedüsen 14, insbesondere nach Art eines Venturi-Rohres, eingedüst. Nach Durchlaufen der Feststoffkanäle 30 wird das verdampfte Inertgas, das Inertisierungsgas, gasdicht aus dem Block in einer Gasleitung 22 gesammelt und einem Sicherheitsbehälter 3 eines Kernkraftwerkes zugeführt. Die Durchflußmenge an verflüssigtem Inertgas 1 durch die Verbindungsleitung 8 hindurch wird über ein Ventil 26 geregelt, welches über eine im Inneren des zweiten Speichers 5 angeordneten Druckmeßstelle 36 gesteuert wird. Durch eine Einrichtung 10 erfolgt eine Einspeisung eines katalytischen Aerosols oder von zusätzlichem verflüssigten Inertgases 1. Zusätzlich in die Gasleitung 22 eingespeistes verflüssigtes Inertgas 1 wird in dieser verdampft und trägt zu einer Erhöhung der Verdampfungsrate bei.

Das Verfahren zeichnet sich durch seine passive Wirkungsweise sowie durch die Erzeugung einer großen Menge an Inertisierungsgas aus, so daß die Atmosphäre eines Sicherheitsbehälters eines Kernkraftwerkes, insbesondere mit Druckwasserreaktor, innerhalb kurzer Zeit vollständig oder teilweise inertisiert werden kann. Bei einer teilweisen Inertisierung kann durch den Einsatz von Rekombinatoren eine katalytische Umwandlung von in der Atmosphäre des Sicherheitsbehälters enthaltenem Wasserstoff gefahrlos durchgeführt werden. Auf jedem Fall ist somit in einem Störfall eine nachträglich Inertisierung des Sicherheitsbehälters gewährleistet, so daß die Bildung eines explosiven Gemisches, aus Wasserstoff und Sauerstoff, sicher vermieden ist. Die Vorrichtung zeichnet sich durch ihre besonders kompakte Ausführung aus, wobei bestehende Einrichtung eines Kernkraftwerkes, wie beispielsweise eine Venting-Einrichtung mit einem Hochtemperatur-Energiespeicher sowie Leitungen, integriert werden können. Die Vorrichtung läßt sich ohne großen bautechnischen Aufwand nachträglich einfach installieren. Sie ist ebenfalls im Inneren des Sicherheitsbehälters eines Kernkraftwerks anordenbar.

## Patentansprüche

1. Verfahren zur Erzeugung eines Inertisierungsgases (1) zur Einspeisung in einen Behälter (3), insbesondere in einen Sicherheitsbehälter eines Kernkraftwerks, bei dem ein Inertgas (1) in verflüssigter oder verfestigter Form in einem ersten Speicher (4) vorgehalten wird, in einem zweiten Speicher (5) eine zur Verdampfung von verflüssigtem bzw. verfestigtem Inertgas (1) ausreichende Wärmemenge in einem Wärmeträger (2) bereitgestellt wird und der Wärmeträger (2) und das verflüssigte bzw. verfestigte Inertgas (1) in thermischen Kontakt miteinander gebracht werden, wobei in dem zweiten Speicher (5) eine Temperatur von über 100 °C, bei einem flüssigen Wärmeträger (2) vorzugsweise zwischen 150 °C und 250 °C und bei einem feststoffartigen Wärmeträger (2) vorzugsweise zwischen 300 °C und 800 °C, herrscht.

2. Verfahren nach Anspruch 1,
**dadurch gekennzeichnet,** daß als Inertgas (1) Kohlendioxid und/oder Stickstoff verwendet wird.

3. Verfahren nach einem der vorhergehenden Ansprüche,
**dadurch gekennzeichnet**, daß ein flüssiger Wärmeträger (2), wie Wasser oder ein Öl, verwendet wird.

4. Verfahren nach einem der Ansprüche 1 bis 3,
**dadurch gekennzeichnet,** daß verfestigtes Inertgas (1) in feinverteilter Form in einen flüssigen Wärmeträger (2) eingeführt wird.

5. Verfahren nach einem der Ansprüche 1 oder 2,
**dadurch gekennzeichnet,** daß ein feststoffartiger Wärmeträger (2), insbesondere aus Metall oder einer Keramik, verwendet wird.

6. Verfahren nach Anspruch 5,
**dadurch gekennzeichnet,** daß der feststoffartige Wärmeträger (2) schüttfähig ist, insbesondere in Form von Schüttgut oder als Kugelhaufen vorliegt.

7. Verfahren nach einem der vorhergehenden Ansprüche,
**dadurch gekennzeichnet,** daß in dem ersten Speicher und/oder dem zweiten Speicher ein Druck von 5 bis 50 bar, vorzugsweise 20 bar, herrscht.

8. Verfahren nach einem der vorhergehenden Ansprüche,
**dadurch gekennzeichnet,** daß in dem ersten Speicher eine Temperatur von unter -10 °C herrscht.

9. Verfahren nach einem der vorhergehenden Ansprüche,
**dadurch gekennzeichnet,** daß das Inertgas (1) auf eine Temperatur von über -20 °C, insbesondere von über -10 °C, aufgeheizt wird.

10. Verfahren nach einem der vorhergehenden Ansprüche,
**dadurch gekennzeichnet,** daß der Wärmeträger (2) flüssig ist und in verflüssigtes Inertgas eingeführt wird, insbesondere in feinverteilter Form und/oder mit einer Geschwindigkeit von über 10 m/s.

11. Verfahren nach einem der Ansprüche 1 bis 10,
**dadurch gekennzeichnet,** daß verflüssigtes Inertgas (1) in den Wärmeträger (2) eingedüst wird, insbesondere in feinverteilter Form und/oder mit einer Geschwindigkeit von über 10 m/s.

12. Verfahren nach einem der vorhergehenden Ansprüche,
**dadurch gekennzeichnet,** daß dem Inertgas (1) im Anschluß an seine Verdampfung ein katalytisches Aerosol als Suspension oder Pulver beigemischt wird, welches geeignet ist, eine Oxidation von Wasserstoffgas bei Raumtemperatur einzuleiten.

13. Verfahren nach einem der vorhergehenden Ansprüche,
**dadurch gekennzeichnet,** daß im Anschluß an seine Verdampfung das Inertgas (1) in einen Behälter (3) eingeführt wird, der Wasserstoffgas aufweist, und eine Verringerung der Wasserstoffgas-Konzentration zur vollständigen Inertisierung des Behälters (3) oder zur kontrollierten Wasserstoffgas-Umwandlung durchgeführt wird.

14. Vorrichtung zur Erzeugung eines Inertisierungsgases (1) zur Einspeisung in einen Behälter (3), insbesondere in einen Sicherheitsbehälter eines Kernkraftwerks, mit
a) einem ersten Speicher (4) zur Aufbewahrung von verflüssigtem oder verfestigtem Inertgas (1),
b) einem zweiten Speicher (5) zur Bereitstellung eines Wärmeträgers (2) mit einer Temperatur von über 100 °C und
c) einer Verbindung (8), die im Normalfall geschlossen ist und eine thermische Isolierung des verflüssigten bzw. verfestigten Inertgases (1) von dem Wärmeträger (2) gewährleistet und die im Bedarfsfall geöffnet ist, so daß ein thermischer Kontakt des Inertgases (1) mit dem Wärmeträger (2) herstellbar ist.

15. Vorrichtung nach Anspruch 14,
**dadurch gekennzeichnet,** daß bei geöffneter Verbindung (8) ein druckgetriebener Strom des verflüssigten Inertgases (1) oder eines flüssigen Wärmeträgers (2) erfolgt, insbesondere der erste Speicher (4) unter einem höheren Druck als der zweite Speicher (5) steht bzw. umgekehrt.

16. Vorrichtung nach Anspruch 14 oder 15,
**dadurch gekennzeichnet,** daß der zweite Speicher (5) einen Überhitzer (21) aufweist, in dem verdampftes Inertgas (1) zusätzlich aufheizbar ist.

17. Vorrichtung nach einem der Ansprüche 14 bis 16,
**dadurch gekennzeichnet,** daß eine Einrichtung (10) zur Einspeisung eines katalytischen Aerosols, beispielsweise in Form einer Suspension oder eines Pulvers, in verdampftes Inertgas vorgesehen ist.

18. Vorrichtung nach einem der Ansprüche 14 bis 17,
**dadurch gekennzeichnet,** daß der zweite Speicher (5) ein Heizbehälter (11) einer Venting-Einrichtung eines Kernkraftwerks ist.

19. Vorrichtung nach einem der Ansprüche 14 bis 18, welche innerhalb eines Sicherheitsbehälters (13) eines Kernkraftwerks angeordnet ist.

## Claims

1. Process for generating an inerting gas (1) for feeding into a container (3), in particular into a containment shell of a nuclear power plant, in which an inert gas (1) is kept in a liquefied or solidified form in a first reservoir (4), a sufficient amount of heat to vaporize liquefied or solidified inert gas (1) is made available in a heat transfer medium (2) in a second reservoir (5), and the heat transfer medium (2) and the liquefied or solidified inert gas (1) are brought into thermal contact with one another, a temperature of above 100°C, in the case of a liquid heat transfer medium (2) preferably between 150°C and 250°C and in the case of a solid heat transfer medium (2) preferably between 300°C and 800°C, prevailing in the second reservoir (5).

2. Process according to Claim 1, characterized in that carbon dioxide and/or nitrogen is used as the inert gas (1).

3. Process according to one of the preceding claims, characterized in that a liquid heat transfer medium (2), such as water or an oil, is used.

4. Process according to one of Claims 1 to 3, characterized in that solidified inert gas (1) is introduced in finely divided form into a liquid heat transfer medium (2).

5. Process according to one of Claims 1 and 2, characterized in that a solid heat transfer medium (2), in particular made of metal or a ceramic, is used.

6. Process according to Claim 5, characterized in that the solid heat transfer medium (2) is pourable, in particular is present in the form of bulk material or as a pebble bed.

7. Process according to one of the preceding claims, characterized in that a pressure of 5 to 50 bar, preferably 20 bar, prevails in the first reservoir and/or the second reservoir.

8. Process according to one of the preceding claims, characterized in that a temperature of below -10°C prevails in the first reservoir.

9. Process according to one of the preceding claims, characterized in that the inert gas (1) is heated to a temperature of above -20°C, in particular of above -10°C.

10. Process according to one of the preceding claims, characterized in that the heat transfer medium (2) is liquid and is introduced into liquefied inert gas, in particular in finely divided form and/or at a speed of over 10 m/s.

11. Process according to one of Claims 1 to 10, characterized in that liquefied inert gas (1) is sprayed into the heat transfer medium (2), in particular in finely divided form and/or at a speed of over 10 m/s.

12. Process according to one of the preceding claims, characterized in that the inert gas (1), following its vaporization, is admixed with a catalytic aerosol as a suspension or a powder, which is suitable for triggering oxidation of hydrogen gas at room temperature.

13. Process according to one of the preceding claims, characterized in that the inert gas (1), following its vaporization, is introduced into a container (3), which contains hydrogen gas, and the hydrogen gas concentration is reduced in order to render the container (3) completely inert or in order to convert the hydrogen gas in a controlled manner.

14. Apparatus for generating an inerting gas (1) for feeding into a container (3), in particular into a containment shell of a nuclear power plant, having
a) a first reservoir (4) for storing liquefied or solidified inert gas (1),
b) a second reservoir (5) for making available a heat transfer medium (2) at a temperature of above 100°C, and
c) a connection (8), which is normally closed and ensures that the liquefied or solidified inert gas (1) is thermally isolated from the heat transfer medium (2), and which is open when required, so that the inert gas (1) can be brought into thermal contact with the heat transfer medium (2).

15. Apparatus according to Claim 14, characterized in that, when the connection (8) is open, a pressure-driven flow of the liquefied inert gas (1) or of a liquid heat transfer medium (2) takes place, in particular the first reservoir (4) is under a higher pressure than the second reservoir (5), or vice versa.

16. Apparatus according to Claim 14 or 15, characterized in that the second reservoir (5) has a superheater (21), in which vaporized inert gas (1) can be heated further.

17. Apparatus according to one of Claims 14 to 16, characterized in that a device (10) for feeding a catalytic aerosol, for example in the form of a suspension or a powder, into vaporized inert gas is provided.

18. Apparatus according toone of Claims 14 to 17, characterized in that the second reservoir (5) is a heating container (11) of a venting device of a nuclear power plant.

19. Apparatus according toone of Claims 14 to 18, which is arranged inside a containment shell (3) of a nuclear power plant.

## Revendications

1. Procédé pour produire un gaz d'inertage (1) pour injection dans une cuve (3), en particulier dans une enceinte de confinement d'une centrale nucléaire, dans lequel un gaz inerte (1) est maintenu en réserve sous forme liquéfiée ou solidifiée dans un premier réservoir (4), une quantité de chaleur suffisant à l'évaporation du gaz inerte (1) liquéfié ou solidifié est mise à disposition dans un caloporteur (2) dans un deuxième réservoir (5), et le caloporteur (2) et le gaz inerte (1) liquéfié ou solidifié sont mis en contact thermique l'un avec l'autre, une température supérieure à 100°C régnant dans le deuxième réservoir (5), cette température étant de préférence comprise entre 150 et 250°C dans le cas d'un caloporteur (2) liquide et étant de préférence comprise entre 300 et 800°C dans le cas d'un caloporteur (2) solide.

2. Procédé selon la revendication 1, caractérisé en ce qu'on utilise en tant que gaz inerte (1) du dioxyde de carbone et/ou de l'azote.

3. Procédé selon l'une des revendications précédentes, caractérisé en ce qu'on utilise un caloporteur (2) liquide tel que l'eau ou une huile.

4. Procédé selon l'une des revendications 1 à 3, caractérisé en ce qu'un gaz inerte solidifié (1) est introduit sous forme finement divisée dans un caloporteur liquide (2).

5. Procédé selon l'une des revendications 1 ou 2, caractérisé en ce qu'on utilise un caloporteur solide (2), en particulier en métal ou en une céramique.

6. Procédé selon la revendication 5, caractérisé en ce que le caloporteur solide (2) peut être déversé et se présente en particulier sous forme d'un produit en vrac ou d'amas de billes.

7. Procédé selon l'une des revendications précédentes. caractérisé en ce que dans le premier réservoir et/ou le deuxième réservoir règne une pression de 5 à 50 bar, de préférence de 20 bar.

8. Procédé selon l'une des revendications précédentes, caractérisé en ce que dans le premier réservoir règne une température inférieure à -10°C.

9. Procédé selon l'une des revendications précédentes, caractérisé en ce que le gaz inerte est chauffé à une température supérieure à -20°C et en particulier supérieure à -10°C.

10. Procédé selon l'une des revendications précédentes. caractérisé en ce que le caloporteur (2) est liquide et est introduit dans un gaz inerte liquéfié, en particulier sous forme finement divisée et/ou à une vitesse supérieure à 10 m/s.

11. Procédé selon l'une des revendications 1 à 10, caractérisé en ce qu'un gaz inerte liquéfié (1) est injecté dans le caloporteur (2), en particulier sous forme finement divisée et/ou à une vitesse supérieure à 10 m/s.

12. Procédé selon l'une des revendications précédentes, caractérisé en ce qu'on mélange au gaz inerte (1) après son évaporation un aérosol catalytique en suspension ou en poudre, qui permet de déclencher une oxydation de l'hydrogène gazeux à la température ambiante.

13. Procédé selon l'une des revendications précédentes, caractérisé en ce que, après son évaporation, le gaz inerte (1) est introduit dans une cuve (3) qui contient de l'hydrogène gazeux, et on procède à une diminution de la concentration de l'hydrogène gazeux pour assurer un inertage complet de la cuve (3) ou une conversion régulée de l'hydrogène gazeux.

14. Equipement pour produire un gaz d'inertage (1) destiné à être injecté dans une cuve (3), en particulier dans une enceinte de confinement d'une centrale nucléaire, et comportant :
a) un premier réservoir (4) pour conserver un gaz inerte (1) liquéfié ou solidifié,
b) un deuxième réservoir (5) destiné à mettre à disposition un caloporteur (2 à une température supérieure à 100°C, et
c) une liaison (8), qui, dans le cas normal, est fermée et garantit une isolation thermique entre le gaz inerte (1) liquéfié ou solidifié et la caloporteur (2), et qui en cas de nécessité, est ouverte, de façon à pouvoir réaliser un contact thermique entre le gaz inerte (1) et le caloporteur (2).

15. Equipement selon la revendication 14, caractérisé en ce que. quand la liaison (8) est ouverte, il se crée un courant, commandé par la pression, du gaz inerte liquéfié (1) ou du caloporteur liquide (2), et en particulier le premier réservoir (4) se trouve à une pression supérieure à celle qui règne dans le deuxième réservoir (5), ou inversement.

16. Equipement selon la revendication 14 ou 15, caractérisé en ce que le deuxième réservoir (5) comporte un surchauffeur (21) pouvant être en outre chauffé dans le gaz inerte évaporé (1).

17. Equipement selon l'une des revendications 14 à 16, caractérisé en ce qu'on prévoit un dispositif (10) pour injecter un aérosol catalytique, par exemple sous forme d'une suspension ou d'une poudre, dans le gaz inerte évaporé.

18. Equipement selon l'une des revendications 14 à 17, caractérisé en ce que le deuxième réservoir (5) est une cuve de chauffage (11) d'un dispositif de mise à l'atmosphère d'une centrale nucléaire.

19. Equipement selon l'une des revendications 14 à 18, qui est disposé à l'intérieur d'une enceinte de confinement (13) d'une centrale nucléaire.
